# EUROPÄISCHE PATENTSCHRIFT

(11) **EP 1 811 149 B1**
(45) Veröffentlichungstag und Bekanntmachung des Hinweises auf die Patenterteilung: **07.10.2009**
(21) Anmeldenummer: 06021922.7
(22) Anmeldetag: 19.10.2006
(51) Int. Cl.: F02B 37/24

(54) **Verfahren und Steuergerät eines Turboladers mit variablem Turbinenströmungsquerschnitt**
Method and controller for turbocharger with variable geomentry
Procédé et éléments de réglage pour turbocompresseurs ayant une section au col variable

(30) Priorität: 24.01.2006 DE 102006003539
(43) Veröffentlichungstag der Anmeldung: 25.07.2007
(73) Patentinhaber: Dr. Ing. h.c. F. Porsche Aktiengesellschaft, 70435 Stuttgart (DE)
(72) Erfinder: Sterner, Andreas, 71696 Moeglingen (DE); Hofstetter, Matthias, 77975 Ringsheim (DE)

(56) Entgegenhaltungen:
- EP-A- 1 079 083
- EP-A1- 0 189 121
- EP-A1- 1 099 838
- WO-A-01/11197
- US-A1- 2005 226 718

## Beschreibung

Die Erfindung betrifft sowohl ein Verfahren als auch ein Steuergerät zum Einstellen eines Istwerts eines Turbinenströmungsquerschnitts eines Turboladers eines Verbrennungsmotors in einem Kraftfahrzeug bei einem Wechsel der Last des Verbrennungsmotors von einem größeren Lastwert auf einen kleineren Lastwert. Die Zeitableitung der Last ist dann negativ, so dass ein solcher Lastwechsel auch als negativer Lastwechsel bezeichnet werden kann.

Dabei wird unter der Last des Verbrennungsmotors vor allem die auf eine maximal mögliche Füllung eines Brennraums des Verbrennungsmotors mit brennfähigem Gemisch normierte tatsächliche Füllung verstanden. Die relative Füllung ist eine wesentliche Stellgröße zur Einstellung des vom Verbrennungsmotor gelieferten Drehmoments.

Das eingangs genannte Verfahren ist aus der Reihe "Die Bibliothek der Technik, Band 103, Abgasturbolader", Verlag Moderne Industrie, D-86896 Landsberg/Lech, ISBN 3-478-93263-7, dort Seite 40, bekannt. Diese Literaturstelle behandelt einen Turbolader mit verstellbarer Turbinengeometrie (VTG), bei dem der Turbinen-Strömungsquerschnitt durch Schließen von Leitschaufeln verkleinert wird, um ein höheres Druckgefälle zwischen dem Turbineneintritt und dem Turbinenaustritt zu erzeugen. Für eine Beschleunigung aus niedrigen Drehzahlen heraus sollen die Leitschaufeln geschlossen werden, um die maximale Energie aus dem Abgas zu gewinnen. Ferner öffnen die Schaufeln mit zunehmender Drehzahl und passen sich dem jeweiligen Betriebspunkt an.

Die Leitschaufeln sind in einem ringförmigen Spalt angeordnet, der vom Abgas von außen nach innen durchströmt wird. Bei radialer Ausrichtung der Leitschaufeln ergibt sich ein kleinerer Turbinenströmungsquerschnitt als bei tangentialer Ausrichtung der Leitschaufeln. Bei Ottomotoren kann die Abgastemperatur vor der Turbine in einer Bandbreite von wenigen hundert °C bis über 1000° C schwanken. Aufgrund der daraus resultierenden hohen thermischen Belastung der Leitschaufeln und aufgrund von Ruß- und/oder Ölkohle-Partikeln, die sich mit der Zeit vor der Turbine ansammeln, kann es passieren, dass die Leitschaufeln im ringförmigen Querschnitt festklemmen.

Bei bekannten Systemen wird ein Klemmen der Leitschaufeln mit On Board Diagnose-Mitteln im Betrieb des Kraftfahrzeugs erkannt und der Verbrennungsmotor in eine Notlaufmodus umgeschaltet, um Folgeschäden des Turboladers und/oder des Verbrennungsmotors zu vermeiden. Dies ist für den Fahrer spürbar und wird als Nachteil empfunden. Wenn die Leitschaufeln in einer fast offenen Stellung klemmen, führt dies zum Beispiel bereits zu einem erheblichen Verlust des maximal realisierbaren Drehmoments beim Beschleunigen mit anfänglich niedrigen Drehzahlen.

Vor diesem Hintergrund besteht die Aufgabe der Erfindung in der Angabe eines Verfahrens und eines Steuergeräts, mit dem ein Umschalten in einen Notlaufmodus möglichst weitgehend vermieden wird, ohne die genannten Folgeschäden und/oder Verluste am maximal realisierbaren Drehmoment in Kauf nehmen zu müssen.

Diese Aufgabe wird bei einem Verfahren der eingangs genannten Art dadurch gelöst, dass ein für den kleineren Lastwert einzustellender Istwert des Turbinenströmungsquerschnitts verzögert auf einen Sollwert eingestellt wird, der für den kleineren Lastwert unter stationären Bedingungen vorgegeben wird.

Die Erfindung basiert auf der Erkenntnis, dass ein Klemmen meist nach einem negativen Lastwechsel im fast offenen Zustand auftritt.

Durch das erfindungsgemäß nach einem negativen Lastwechsel verzögert erfolgende Einstellen des Turbinenströmungsquerschnitts auf den für stationäre Bedingungen gültigen Sollwert erfolgt gewissermaßen eine Berücksichtigung der Vorgeschichte des aktuellen Betriebspunktes. Die mit Blick auf eine Neigung zu klemmenden Leitschaufeln kritische Kombination aus noch heißen Leitschaufeln und der geöffneten Leitschaufelstellung kann so vermieden werden. Als Folge kann die Häufigkeit, mit der ein Klemmen der Leitschaufeln und/oder ihrer Verstellmechanik auftritt, wesentlich reduziert werden.

Dabei ist bevorzugt dass die Einstellung auf den unter stationären Bedingungen vorzugebenden Sollwert durch Vorgabe eines Verlaufs von Sollwerten erfolgt, der zu dem unter stationären Bedingungen vorzugebenden Sollwert führt.

Auf diese Weise wird sichergestellt, dass der für stationäre Bedingungen gültige Sollwert erreicht wird, wenn sich Klemmneigung reduziert hat. Die Vorgabe eines Verlaufs von Sollwerten erlaubt eine Optimierung der Verringerung der Klemmneigung.

Bevorzugt ist auch, dass der Verlauf in Abhängigkeit von Betriebsparametern des Verbrennungsmotors vorgegeben wird.
Typischerweise kommt daher wenigstens einer der nachfolgenden Größen in Frage: Brennraumfüllung, Drehzahl, Abgastemperatur, kumulierter Luftmassendurchsatz.

Jede dieser Größen stellt einzeln oder in Kombination mit einer oder mehreren der anderen Größen ein Maß für die mit dem Abgasmassenstrom transportierte Wärme und damit auch für die Aufheizung und Klemmgefahr dar. Daher erlaubt diese Ausgestaltung eine von einer modellierten Klemmgefahr abhängige Einschränkung oder Verzögerung bei der Verstellung der Leitschaufeln.

Ferner ist bevorzugt, dass die Betriebsparameter von der Umgebung, in der der Verbrennungsmotor betrieben wird, abhängig sind. Solche Betriebsparameter umfassen bevorzugt wenigstens einen Betriebsparameter, der einen Druck oder eine Temperatur im Ansaugsystem des Verbrennungsmotors angibt.

Diese Ausgestaltung basiert auf der Erkenntnis, dass zum Beispiel ein Betrieb in großer Höhe mit geringem Umgebungsdruck ein längeres Beibehalten einer Zwischenstellung der Schaufeln erlaubt, weil die damit verbundene erhöhte Luftförderung des Turboladers wegen des geringen Umgebungsdrucks noch nicht zu kritisch großen Brennraumfüllungen führt. Der genannte Verlauf kann daher unter diesen Bedingungen noch zeitlich gestreckt werden.

Niedrige Ladelufttemperaturen gehen mit entsprechend verringerten Abgastemperaturen einher und erlauben wegen der damit verbundenen Kühlwirkung ein zeitliches Stauchen des Verlaufs.

Bevorzugt ist auch, dass der Verlauf wenigstens einen Zwischenwert des Turbinenströmungsquerschnitts aufweist, der größer als der bei dem größeren Lastwert eingestellte Turbinenströmungsquerschnitt und kleiner als der für den kleineren Lastwert unter stationären Bedingungen einzustellende Turbinenströmungsquerschnitt ist. Mit anderen Worten: Die Vergrößerung des Turbinenströmungsquerschnitts wird nach einem negativen Lastwechsel beschränkt. Die Leitschaufeln werden zwar in eine weiter offene Stellung gefahren, jedoch nicht soweit geöffnet, wie es unter stationären Bedingungen der Fall wäre.

Es hat sich gezeigt, dass ein Klemmen meist im fast offenen Zustand auftritt und von hohen Temperaturen begünstigt wird. Es tritt daher insbesondere gehäuft nach einer geschlossenen Stellung auf, wie sie beim Beschleunigen eingestellt wird. Ein Beschleunigen mit anschließendem starkem Reduzieren der Drehmomentanforderung stellt daher ein Beispiel einer solchen kritischen Kombination aus aktuellem Betriebspunkt und seiner Vorgeschichte dar. Diese kritische Kombination wird mit der genannten Ausgestaltung vermieden.

Ferner ist bevorzugt, dass eine Zeitdauer der Verzögerung auf einen vorbestimmten Maximalwert beschränkt ist.

Durch diese Ausgestaltung wird der Einfluss der Vorgeschichte nach dem Erreichen des Maximalwerts der Zeitdauer nicht mehr berücksichtigt. Dadurch kann eine Temperaturnormalisierung berücksichtigt werden, die zum Beispiel einige Zeit nach einer Beschleunigungsphase durch wieder kühleres Abgas eintritt.

Ferner ist bevorzugt, dass überprüft wird, ob eine Leitschaufel-Verstellmechanik klemmt und dass bei einem Klemmen eine Losbrechfunktion aktiviert wird.

Diese Ausgestaltung greift dann, wenn es trotz der weiter oben genannten Maßnahmen zu klemmenden Leitschaufeln gekommen ist. In vielen Fällen führt diese Losbrechfunktion zu einem Lösen der vorher klemmenden Leitschaufeln, so dass das Umschalten in den Notlaufbetrieb vermieden werden kann. Die Losbrechfunktion wird in einer weiteren Ausgestaltung periodisch wiederholt. Dadurch kann auch ein starkes Klemmen mit der Zeit und im Zusammenspiel mit wechselnden Abgastemperaturen gelöst werden.

Eine weitere Ausgestaltung sieht vor, dass eine Häufigkeit für das Auftreten einer klemmenden Leitschaufel-Verstellmechanik bestimmt wird und dass ein Notlaufprogramm aktiviert wird, wenn die Häufigkeit einen vorbestimmten Schwellenwert überschreitet.

Klemmende Leitschaufeln ändern das Betriebsverhalten des Verbrennungsmotors. Sie führen zum Beispiel zu Änderungen des Ladedrucks und des Abgasgegendrucks. Die Tolerierbarkeit von Klemmzuständen sinkt mit der Häufigkeit ihres Auftretens. Die Berücksichtigung der Häufigkeit beim Umschalten in einen Notlaufbetrieb vermeidet eine Umschaltung bei einer noch tolerierbaren Häufigkeit ohne eine Umschaltung bei einer nicht mehr tolerierbaren Häufigkeit zu verhindern.

Die gleichen Vorteile ergeben sich für entsprechende Ausgestaltungen des Steuergeräts. Weitere Vorteile ergeben sich aus der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen, jeweils in schematischer Form:
- Fig. 1: einen Verbrennungsmotor mit einem Turbolader mit variabler Turbinengeometrie;
- Fig. 2: eine Prinzip-Darstellung der Variation der Turbinengeometrie;
- Fig. 3: einen zeitlichen Verlauf einer Last des Verbrennungsmotors bei einem kurzzeitigen Beschleunigungsvorgang,
- Fig. 4: einen korrespondierenden zeitlichen Verlauf des Turbinenströmungsquerschnitts nach einem negativen Lastwechsel beim Stand der Technik, und
- Fig. 5: entsprechende Verläufe des Turbinenströmungsquerschnitts nach einem negativen Lastwechsel bei Ausgestaltungen des erfindungsgemäßen Verfahrens.

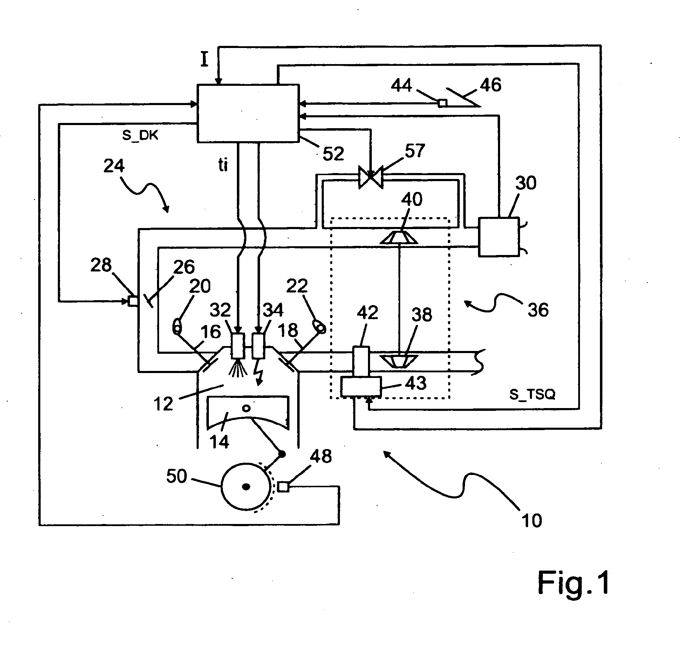

Im Einzelnen zeigt Fig. 1 einen Verbrennungsmotor 10 mit wenigstens einem Brennraum 12, der von einem Kolben 14 beweglich abgedichtet wird. Ein Wechsel von Füllungen des Brennraums 12 wird über ein Einlassventil 16 und ein Auslassventil 18 gesteuert, wobei das Einlassventil 16 von einem Einlassventilsteller 20 und das Auslassventil 18 von einem Auslassventilsteller 22 betätigt wird. Der Einlassventilsteller 20 steuert das Einlassventil 16 in einer Ausgestaltung mit einem variablen Hub und dient so als Füllungsstellglied.

Bei geöffnetem Einlassventil 16 strömt Luft oder ein Gemisch aus Luft und Brennstoff aus einem Ansaugsystem 24 in den Brennraum 12. Die Menge der einströmenden Luft oder des einströmenden Gemisches wird alternativ oder ergänzend zu einer Variation des Hubes des Einlassventils 16 über eine Drosselklappe 26 eingestellt, die durch einen Drosselklappensteller 28 betätigt wird. In jedem Fall wird die Brennraumfüllung dabei maßgeblich vom Druck vor der Drosselklappe 26 und/oder dem Einlassventil 16 als jeweiligem Füllungsstellglied beeinflusst.

Die Brennraumfüllung wird bevorzugt mit einem Füllungssensor 30 gemessen, der als Luftmassenmesser oder Saugrohrdrucksensor realisiert sein kann. Der Kraftstoff wird entweder in das Ansaugsystem 24 (Saugrohreinspritzung) dosiert oder durch einen Injektor 32 direkt in den Brennraum 12 eingespritzt. (Direkteinspritzung).

Auf jeden Fall wird in dem Brennraum 12 eine brennfähige Brennraumfüllung erzeugt, die von einer Zündkerze 34 gezündet wird. Restgase der verbrannten Füllung des Brennraums 12 werden über das geöffnete Auslassventil 18 ausgestoßen.

Der in der Figur 1 dargestellte Verbrennungsmotor 10 weist einen Abgasturbolader 36 auf, dessen Turbinenrad 38 von den ausgestoßenen Abgasen angetrieben wird und das seinerseits ein Verdichterrad 40 im Ansaugsystem 24 antreibt. Der Abgasturbolader 36 weist ferner einen Steller 42 mit einem elektrischen Stellglied 43 zur Steuerung der Geometrie des Turboladers 36 auf. Das elektrische Stellglied 43 ist typischerweise ein Elektromotor, der in Verbindung mit einer Mechanik des Stellers 42 eine geradlinige oder gekrümmt verlaufende Stellbewegung erzeugt.

Drehmomentanforderungen eines Fahrers werden durch einen Fahrerwunschgeber 44 erfasst, der die Stellung eines Fahrpedals 46 des Kraftfahrzeugs erfasst. Ein Drehwinkelsensor 48 tastet Winkelmarkierungen eines drehfest mit einer Kurbelwelle des Verbrennungsmotors 10 verbundenen Geberrades 50 ab und liefert damit eine Information über die Winkellage und Winkelgeschwindigkeit der Kurbelwelle.

Es versteht sich, dass zur Steuerung und/oder Regelung des Verbrennungsmotors 10 bei modernen Kraftfahrzeugen eine Vielzahl weiterer Sensoren vorhanden sein kann, die Drücke, Temperaturen, Winkellagen von Nockenwellen und/oder weitere Betriebsparameter des Verbrennungsmotors 10 erfassen. Die Erfindung ist daher nicht auf eine Verwendung bei einem Verbrennungsmotor 10 beschränkt, der nur die bisher angegebenen Sensoren 30, 44, 48 aufweist. So kann das elektrische Stellglied 43 in einer Ausgestaltung eine Information I über eine eingestellte Leitschaufelposition, also eine Lagerückmeldung, oder ein Eigendiagnoseergebnis bereit stellen.

Zur Steuerung des Verbrennungsmotors 10 werden die Signale des Füllungssensors 30, des Fahrerwunschgebers 44, des Drehwinkelsensors 48, die optional vorhandene Information I und ggf. die Signale alternativer oder weiterer Sensoren von einem Motorsteuergerät 52 verarbeitet, das daraus Stellsignale zur Steuerung von Funktionen des Verbrennungsmotors 10 bildet. Das Steuergerät 52 zeichnet sich insbesondere dadurch aus, dass es zur Steuerung des Ablaufs des erfindungsgemäßen Verfahrens und/oder einer oder mehrerer seiner Ausgestaltungen eingerichtet, insbesondere programmiert ist.

In der Ausgestaltung der Fig. 1 sind dies im Wesentlichen Drosselklappenstellsignale S_DK und Signale S_TSQ, mit denen das Steuergerät 52 einen Turbinen-Öffnungsquerschnitt TSQ steuert, sowie Einspritzimpulsbreiten ti und Zündsignale. Ein ebenfalls vom Steuergerät 52 gesteuertes Schub-Umluftventil 57 ist in einem Bypass des Verdichters 40 angeordnet.

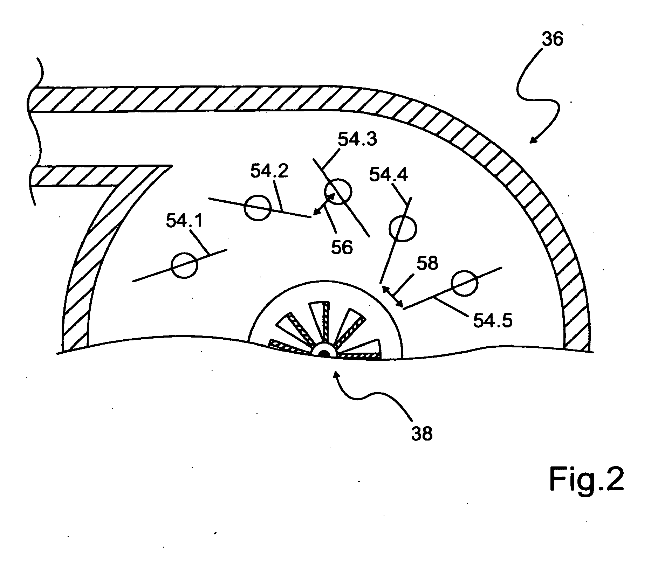

Fig. 2 zeigt eine Ausgestaltung einer Turbine eines Turboladers 36 mit ringförmig angeordneten Leitschaufeln 54.1, 54.2, 54.3, 54.4 und 54.5. Abweichend von der Realität, in der sämtliche Leitschaufeln 54.1, 54.2, 54.3, 54.4 und 54.5 gleich eingestellt werden, sind die Leitschaufeln 54.1, 54.2 und 54.2 in einer geschlossenen Stellung mit einem kleinen Strömungsquerschnitt 56 und die Leitschaufeln 54.4. und 54.5 in einer weiter offenen Stellung mit einem größeren Strömungsquerschnitt 58 dargestellt. Der Grundladedruck wird dabei mit dem größeren Strömungsquerschnitt 66 dargestellt. Die Verstellung erfolgt durch den Steller 42, der zum Beispiel einen mit den Leitschaufeln über bewegliche Hebel verbundenen Verstellring betätigt. Details der Mechanik sind für die Erfindung nicht wesentlich. Bei funktionsfähiger Verstellung werden die Leitschaufeln je nach Drehmomentanforderung oder Last des Verbrennungsmotors zwischen den beiden Extremlagen verstellt.

Wesentlich ist lediglich, dass klemmende Leitschaufeln in einer Stellung stehen bleiben können, in der permanent ein erhöhter Ladedruck generiert wird. Bei weit geöffnetem Füllungsstellglied kann es dann zu übermäßig großen Brennraumfüllungen kommen, die ohne Gegenmaßnahmen zu Schäden an Bauteilen des Verbrennungsmotors wie Auslassventilen 18, Katalysatoren und/oder dem Turbolader 36 führen können. Eine weitere unerwünschte Folge besteht darin, dass der Verbrennungsmotor 10 bei in offener Stellung klemmenden Leitschaufeln 54.1 - 54.5 weniger schnell auf Drehmomentanforderungen reagiert.

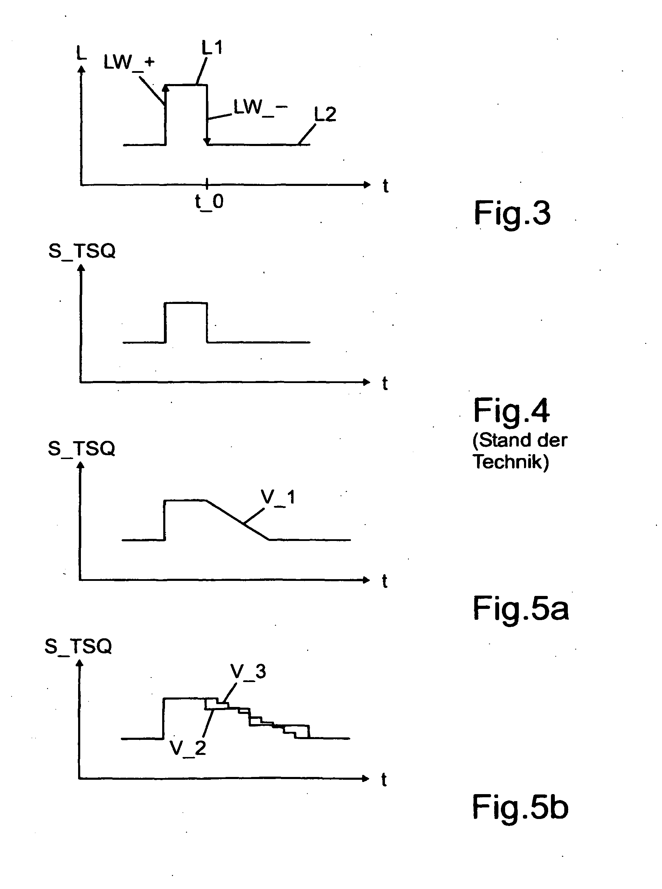

Fig. 3 zeigt in qualitativer Form einen zeitlichen Verlauf einer Last L, wie sie für einen kurzzeitigen Beschleunigungsvorgang typisch ist. Ausgehend von einer niedrigen Last wird zunächst eine hohe Last angefordert, was einem positiven Lastwechsel LW_+ auf einen größeren Lastwert L1 entspricht. Anschließend kommt es zum Zeitpunkt t_0 zu einem negativen Lastwechsel LW_-von dem großen Lastwert L1 auf einen kleineren Lastwert L2. Das Steuergerät 52 stellt die entsprechenden Brennraumfüllungen durch koordinierte Ansteuerung der Drosselklappe 26 mit dem Signal S_DK und des elektrischen Stellglieds 43 mit dem Signal S_TSQ ein.

Fig. 4 zeigt qualitativ einen möglichen zeitlichen Verlauf des Stellsignals S_TSQ oder des Sollwerts oder des Istwerts des Turbinenströmungsquerschnitts, wie er ohne das erfindungsgemäße Verfahren eingestellt wird. In diesem Fall gehört zu dem kleinen Lastwert ein kleines Signal S_TSQ, aus dem sich offene Leitschaufelstellungen, ein kleiner Ladedruck und damit vergleichsweise kleine Brennraumfüllungen ergeben. Zeitlich korrelierend mit dem positiven Lastwechsel LW_+ werden die Leitschaufeln 54.1 - 54.5 in eine geschlossene Position gefahren, bevor sie mit dem negativen Lastwechsel LW_-wieder in eine offene Position gefahren werden. Bei der Darstellung der. Fig. 4 arbeitet das Steuergerät 52 beim negativen Lastwechsel LW_- mit einem Sollwert für das Signal S_TSQ, der dem Sollwert für den kleineren Lastwert L2 unter stationären Bedingungen entspricht. Mit anderen Worten: Die Leitschaufeln werden gleich in die offene Position gefahren, die sie beim kleineren Lastwert L2 unter stationären Bedingungen einnehmen würden.

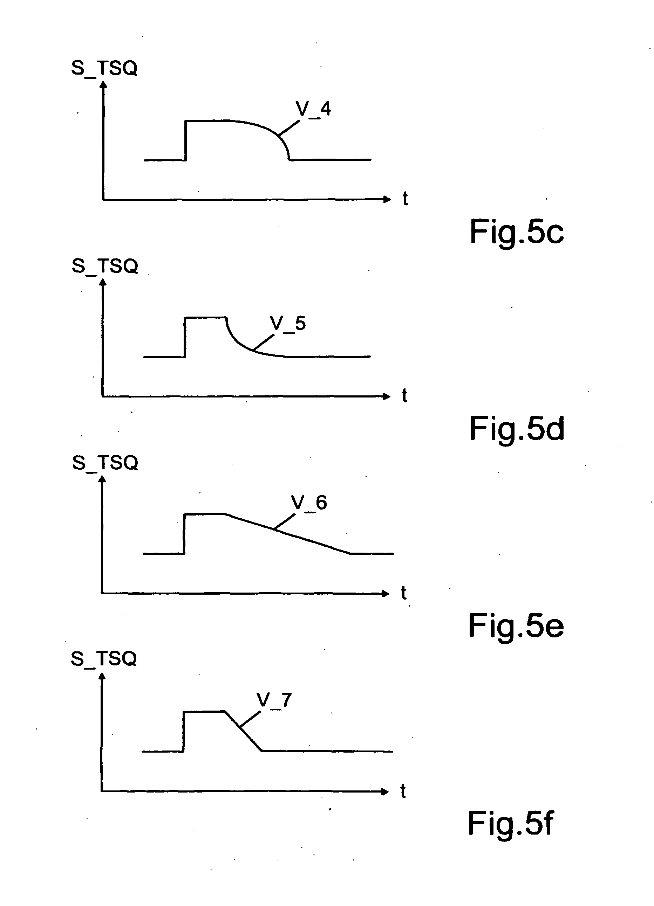

Fig. 5 zeigt dagegen Verläufe von Sollwerten der Stellgröße S_TSQ, wie sie sich für den gleichen Lastsignalverlauf bei Ausgestaltungen des erfindungsgemäßen Verfahrens ergeben. Dabei ist allen Ausgestaltungen gemeinsam, dass die Einstellung auf den unter stationären Bedingungen vorzugebenden Sollwert nach dem negativen Lastwechsel LW_-verzögert erfolgt.

Die Verzögerung erfolgt bevorzugt dadurch, dass an Stelle einer sofortigen Ausgabe des für stationäre Bedingungen gültigen Sollwerts eine Vorgabe eines Verlaufs von Sollwerten erfolgt, der zu dem unter stationären Bedingungen vorzugebenden Sollwert führt. Dabei sind verschiedene Verläufe denkbar, von denen Fig. 5 ohne Anspruch auf Vollständigkeit einige Beispiele zeigt. So zeigt Fig. 5a einen rampenförmigen Verlauf V_1, Fig. 5b stufenförmige Verläufe V_2, V_3 mit unterschiedlicher Zahl der Stufen und Stufenhöhen, Fig. 5c und 5d stetig gekrümmte Verläufe V_4, V_5, wobei im Fall der Fig. 5c eine anfänglich geringe Steigung zunimmt und im Fall der Fig. 5d eine anfänglich große Steigung abnimmt. Die dargestellten Verläufe V_1, ..., V_5 können auch abschnittsweise zu einem zusammengesetzten Verlauf kombiniert werden.

Wie man sieht, weist jeder Verlauf V_1, ..., V_5 wenigstens einen Zwischenwert (Sollwert oder Istwert oder Wert des Stellsignals S_TSQ) des Turbinenströmungsquerschnitts auf, der größer als der bei dem größeren Lastwert L1 eingestellte Turbinenströmungsquerschnitt und kleiner als der für den kleineren Lastwert L2 unter stationären Bedingungen einzustellende Turbinenströmungsquerschnitt ist.

Wie Fig. 5e und 5f zeigen, kann die Verzögerung auch variabel sein. Der Verlauf V_6 der Fig. 5e geht zum Beispiel aus dem Verlauf V_1 der Fig. 5a durch eine Stauchung längs der Zeitachse hervor. Analog ergibt sich der Verlauf V_7 der Fig. 5f durch eine Streckung. Es versteht sich, dass auch die anderen in der Fig. 5 dargestellten Verläufe V_2, ..., V_5 gestreckt oder gestaucht werden können, um die Verzögerung, mit der die Leitschaufeln 54.1 - 54.5 in die für stationäre Bedingungen angepasste offene Position gefahren werden, zu variieren. Dabei kann die Zeitdauer der Verzögerung in einer Ausgestaltung auf einen vorbestimmten Maximalwert beschränkt sein.

Wie bereits erwähnt wurde, kann das Steuergerät 52 die Verzögerung und/oder den speziellen Verlauf V_1, ..., V_7, mit dem auch die Ist-Position der Leitschaufeln 54.1 - 54.5 nach einem negativen Lastwechsel LW_- in die genannte offene Position gefahren werden, in Abhängigkeit von wenigstens einer der nachfolgenden Größen vorgeben: Brennraumfüllung, Drehzahl, Abgastemperatur, kumulierter Luftmassendurchsatz. Alternativ oder ergänzend kann die Vorgabe in Abhängigkeit von Betriebsparametern erfolgen, die von der Umgebung, in der der Verbrennungsmotor 10 betrieben wird, abhängig sind. Beispiele solcher Betriebsparameter sind Drücke oder Temperaturen im Ansaugsystem 24 des Verbrennungsmotors 10, also zum Beispiel ein Ladedruck, eine Ladelufttemperatur oder Drücke und Temperaturen vor dem Verdichter 40 des Turboladers 36.

Bei einer Veränderung der Leitschaufelstellung hin zu einer offeneren Stellung wird also nach dem hier vorgestellten Verfahren nicht sofort ganz geöffnet, sondern zunächst eine zum Beispiel vom Abgasmassenstrom abhängige Stellung eingestellt. Diese verändert sich ggf. mit dem Abgasmassenstrom. Als erwünschte Folge wird zunächst der kritische Bereich fast vollständig offener Leitschaufeln 54.1 - 54.5 nach einem negativen Lastwechsel LW_- vermieden. Als unerwünschte Folge tritt noch eine vergleichsweise große Energieübertragung auf das Turbinenrad 38 und damit eine vergleichsweise große Luftförderung auf der Verdichterseite bei geschlossener Drosselklappe 26 auf. Um ein Pumpen des Verdichters 40 (Vergleiche "Abgasturbolader...", Seite 20, Absatz 3) zu vermeiden, kann ein gegebenenfalls vorhandenes Schub-Umluftventil 57 in der Fig. 1 geöffnet werden, über das Luft vom Verdichterausgang zum Verdichtereingang zurückströmen kann.

Durch die bisher beschriebenen Maßnahmen wird die Fehlertoleranz der Steuerung des Verbrennungsmotors 10 durch präventive Maßnahmen erhöht, die ein Klemmen der Leitschaufeln 54.1 - 54. 5 verhindern. Alternativ oder ergänzend kann das Verfahren, also die Verzögerung der Einstellung einer offenen Leitschaufelstellung auch erst dann aktiviert werden, wenn bereits einmal oder mehrmals ein temporäres Klemmen aufgetreten ist. Das Klemmen wird dabei von einer Eigendiagnoseroutine des Stellers 42 festgestellt und zusammen mit der Position der klemmenden Leitschaufeln an das Steuergerät übermittelt.

Dazu muss der Steller 42 über Mittel zur Feststellung der Leitschaufelposition verfügen, was bereits von bei Dieselmotoren in Serie verwendeten Stellern 42 mit Lagerückmeldung bekannt ist. Ein bekannter Steller 42 mit elektrischem Stellglied 43 schaltet bei einem erkannten Klemmen in ein Notfallprogramm und löst eine Losbrechfunktion aus. Dabei wird unter einer Losbrechfunktion eine oszillierende Ansteuerung des Leitschaufelantriebs zum Losbrechen klemmender Leitschaufeln 54.1 - 54.5 verstanden. Diese Losbrechfunktion wird nur einmal ausgeführt. Ist das Losbrechen bei einer gewissen Anzahl von Perioden des Ansteuersignals nicht erfolgreich, sendet der Steller 43 in seinem Notfallprogramm fortlaufend ein Fehlersignal an das Steuergerät. Positionen der Leitschaufeln werden dabei in dem Notfallprogramm nicht weitergegeben.

Im Rahmen von Ausgestaltungen der Erfindung wird die Losbrechfunktion ergänzend zu den präventiven Maßnahmen genutzt und darüber hinaus gegenüber der bekannten Losbrechfunktion erweitert. Die Erweiterung bezieht sich darauf, dass die Steuerung der Losbrechfunktion durch das Steuergerät 52 übernommen wird. Dazu wird fortlaufend die Schaufelstellung erfasst und in einer RAM Zelle des Steuergeräts 52 rollierend gespeichert (d.h. bei jeder Aktualisierung wird der alte Wert durch einen neuen Wert ersetzt). Bei einem erkannten Klemmen wird die letzte bekannte Position genutzt, um den Motorbetrieb nur soweit wie nötig einzuschränken.

Das Klemmen wird gegebenenfalls durch die Eigendiagnose des Stellers 42 oder durch das Steuergerät 52 festgestellt. Das Steuergerät 52 liefert zum Beispiel eine Soll-Schaufelstellung in Form eines Tastverhältnisses in %, während der Steller 42 eine Ist-Schaufelstellung in Form eines vergleichbaren Tastverhältnisses liefert. Das Steuergerät 52 vergleicht beide Werte und gibt in einer Ausgestaltung bei einer Abweichung, die größer als 2,5 % ist und die länger als 2 s anhält, eine Fehlermeldung aus. Die Kommunikation zwischen Steuergerät 52 und Steller erfolgt über das Signal S_TSQ mit variablem Tastverhältnis. Das Steuergerät 52 gibt Werte zwischen 20 % und 80 % Tastverhältnis zur Steuerung der Verstellung aus. Der Steller 42 gibt entsprechende Werte zwischen 20 % und 80 % Tastverhältnis als Lagerückmeldung zurück.

Tastverhältnisse von 1 bis 19 % und von 81 bis 100 % sind Sondertastverhältnisse. Ein Tastverhältnis von 12 % signalisiert in einer Ausgestaltung ein Klemmen der Leitschaufeln. Ein Tastverhältnis von 8 % signalisiert dabei eine zu hohe Temperatur des Stellers 42 oder seines elektrischen Stellgliedes 43.

Wenn trotz der präventiven Maßnahmen ein Klemmen auftritt, wird eine vom Steuergerät 52 gesteuerte Losbrechfunktion ausgelöst, indem zum Beispiel eine im Steller 42 aktivierbare Routine durch das Steuergerät 52 aktiviert wird.
Dies wird ggf. periodisch solange wiederholt, bis sich die Leitschaufeln 54.1 - 54.5 wieder gelöst haben.

## Patentansprüche

1. Verfahren zum Einstellen eines Istwerts eines Turbinenströmungsquerschnitts eines Turboladers (36) eines Verbrennungsmotors (10) in einem Kraftfahrzeug bei einem Wechsel (LW_-) der Last des Verbrennungsmotors (10) von einem größeren Lastwert (L1) auf einen kleineren Lastwert (L2) wie es nach einem Beschleunigen und einer anschließenden starken Reduzieren der Drehmomentenanforderung auftritt, **dadurch gekennzeichnet, dass** zur Vermeidung der zu klemmenden Leitschaufeln neigenden kritischen Kombination aus noch heißen Leitschaufeln und geöffneter Leitschaufelstellung ein für den kleineren Lastwert (L2) einzustellender Istwert des Turbinenströmungsquerschnitts verzögert auf einen Sollwert eingestellt wird, der für den kleineren Lastwert (L2) unter stationären Bedingungen vorgegeben wird, wobei die Einstellung auf den unter stationären Bedingungen vorzugebenden Sollwert durch Vorgabe eines Verlaufs (V_1, V_2,..., V_7) von Sollwerten erfolgt, der zu dem unter stationären Bedingungen vorzugebenden Sollwert führt und wobei der Verlauf (V_1, V_2, ..., V_7) in Abhängigkeit von Betriebsparametern des Verbrennungsmotors (10) vorgegeben wird.

2. Verfahren nach Anspruch 1, **dadurch gekennzeichnet, dass** der Verlauf (V_1, V_2, ..., V_7) von wenigstens einer der nachfolgenden Größen abhängig ist: Brennraumfüllung, Drehzahl, Abgastemperatur, kumulierter Luftmassendurchsatz,

3. Verfahren nach Anspruch 2, **dadurch gekennzeichnet, dass** die Betriebsparameter von der Umgebung, in der der Verbrennungsmotor (10) betrieben wird, abhängig sind.

4. Verfahren nach Anspruch 3, **dadurch gekennzeichnet, dass** die Betriebsparameter wenigstens einen Betriebsparameter umfassen, der einen Druck oder eine Temperatur im Ansaugsystem (24) des Verbrennungsmotors (10) angibt.

5. Verfahren nach einem der vorhergehenden Ansprüche, **dadurch gekennzeichnet, dass** der Verlauf (V_1, V_2 ,..., V_7) wenigstens einen Zwischenwert des Turbinenströmungsquerschnitts aufweist, der größer als der bei dem größeren Lastwert (L1) eingestellte Turbinenströmungsquerschnitt und kleiner als der für den kleineren Lastwert (L2) unter stationären Bedingungen einzustellende Turbinenströmungsquerschnitt ist.

6. Verfahren nach einem der vorhergehenden Ansprüche, **dadurch gekennzeichnet, dass** eine Zeitdauer der Verzögerung auf einen vorbestimmten Maximalwert beschränkt ist.

7. Verfahren nach einem der vorhergehenden Ansprüche, **dadurch gekennzeichnet, dass** überprüft wird, ob eine Leitschaufel-Verstellmechanik klemmt und dass bei einem Klemmen eine Losbrechfunktion aktiviert wird.

8. Verfahren nach Anspruch 7, **dadurch gekennzeichnet, dass** die Losbrechfunktion periodisch wiederholt wird.

9. Verfahren nach Anspruch 7 oder 8, **dadurch gekennzeichnet, dass** eine Häufigkeit für das Auftreten einer klemmenden Leitschaufel-Verstellmechanik bestimmt wird und dass ein Notlaufprogramm aktiviert wird, wenn die Häufigkeit einen vorbestimmten Schwellenwert überschreitet.

## Claims

1. Method for setting an actual value of a turbine flow cross section of a turbocharger (36) of an internal combustion engine (10) in a motor vehicle during a shift (LW_-) in the load of the internal combustion engine (10) from a relatively high load value (L1) to a relatively low load value (L2), such as occurs after an acceleration and a subsequent significant reduction in the torque demand, **characterized in that**, to avoid the critical combination of guide blades which are still hot and an open guide blade position, which tends to cause the guide blades to become jammed, an actual value, which is to be set for the relatively low load value (L2), of the turbine flow cross section is set in a delayed fashion to a nominal value which is predefined for the relatively low load value (L2) under steady-state conditions, with the setting of said actual value to the nominal value which is to be predefined under steady-state conditions taking place by virtue of a profile (V_1, V_2, ... V_7) of nominal values being predefined, which profile leads to the nominal value which is to be predefined under steady-state conditions, and with the profile (V_1, V_2, ... V_7) being predefined as a function of operating parameters of the internal combustion engine (10).

2. Method according to Claim 1, **characterized in that** the profile (V_1, V_2, ... V_7) is dependent on at least one of the following variables: combustion chamber charge, rotational speed, exhaust-gas temperature, cumulated air mass throughput.

3. Method according to Claim 2, **characterized in that** the operating parameters are dependent on the environment in which the internal combustion engine (10) is being operated.

4. Method according to Claim 3, **characterized in that** the operating parameters comprise at least one operating parameter which indicates a pressure or a temperature in the induction system (24) of the internal combustion engine (10).

5. Method according to one of the preceding claims, **characterized in that** the profile (V_1, V_2, ... V_7) has at least one intermediate value of the turbine flow cross section, which intermediate value is greater than the turbine flow cross section which is set at the relatively high load value (L1) and which intermediate value is smaller than the turbine flow cross section which is to be set for the relatively low load value (L2) under steady-state conditions.

6. Method according to one of the preceding claims, **characterized in that** a time duration of the delay is restricted to a predetermined maximum value.

7. Method according to one of the preceding claims, **characterized in that** it is checked whether a guide blade adjusting mechanism is jammed, and a breakaway function is activated if jamming occurs.

8. Method according to Claim 7, **characterized in that** the breakaway function is repeated periodically.

9. Method according to Claim 7 or 8, **characterized in that** a frequency of the occurrence of a jammed guide blade adjusting mechanism is determined, and **in that** an emergency running program is activated if the frequency exceeds a predetermined threshold value.

## Revendications

1. Procédé de réglage d'une valeur théorique d'une section de col de turbine d'un turbocompresseur (36) d'un moteur à combustion interne (10) dans un véhicule automobile en cas de variation (LW_-) de la charge du moteur à combustion interne (10) d'une valeur de charge supérieure (L1) à une valeur de charge inférieure (L2), comme cela se produit après une accélération suivie d'une forte réduction de demande de couple, **caractérisé en ce que** pour éviter la combinaison critique inclinant les boucles conductrices à enficher lorsqu'elles sont encore chaudes dans une position ouverte de boucle conductrice pour la plus petite valeur de charge (L2), une valeur théorique réglée pour la plus petite section de col de turbine est réglée en renonçant à une valeur théorique prédéfinie pour la plus petite valeur de charge (L2) dans des conditions stationnaires, le réglage de la valeur théorique fixée à l'avance pour des conditions stationnaires étant réalisé en définissant à l'avance une courbe (V_1, V_2, ..., V_7) de valeurs théoriques permettant de déduire la valeur théorique à prédéfinir dans des conditions stationnaires et la courbe (V_1, V_2, ..., V_7) étant prédéfinie en fonction de paramètres de fonctionnement du moteur à combustion interne (10).

2. Procédé selon la revendication 1, **caractérisé en ce que** la courbe (V_1, V_2, ..., V_7) dépend d'au moins une des grandeurs suivantes : remplissage de la chambre de combustion, vitesse de rotation du moteur, température des gaz d'échappement, débit cumulé de la masse d'air.

3. Procédé selon la revendication 2, **caractérisé en ce que** les paramètres de fonctionnement dépendent de l'environnement dans lequel le moteur à combustion interne (10) est utilisé.

4. Procédé selon la revendication 3, **caractérisé en ce que** les paramètres de fonctionnement comprennent au moins un paramètre de fonctionnement qui indique une pression ou une température dans le système d'aspiration (24) du moteur à combustion interne (10).

5. Procédé selon l'une quelconque des revendications précédentes, **caractérisé en ce que** la courbe (V_1, V_2, ..., V_7) comporte au moins une valeur intermédiaire de la section de col de turbine supérieure à la section transversale de col de turbine réglée pour la plus grande valeur de charge (L1) et inférieure à la section de col de turbine à régler pour la plus petite valeur de charge (L2) dans des conditions stationnaires.

6. Procédé selon l'une quelconque des revendications précédentes, **caractérisé en ce qu'**une durée de décélération est limitée à une valeur maximale prédéfinie.

7. Procédé selon l'une quelconque des revendications précédentes, **caractérisé en ce que** l'on contrôle si un mécanisme de réglage de boucle conductrice est enfiché et s'il l'est, si une fonction de démarrage est activée.

8. Procédé selon la revendication 7, **caractérisé en ce que** la fonction de démarrage est répétée de façon périodique.

9. Procédé selon la revendication 7 ou 8, **caractérisé en ce que** la fréquence de survenue d'un mécanisme de réglage de boucle conductrice à enficher est déterminée et **en ce qu'**un programme d'urgence est activé lorsque la fréquence dépasse une valeur seuil prédéfinie.
